# EUROPEAN PATENT APPLICATION

(11) **EP 2 525 299 A1**
(43) Date of publication of application: **21.11.2012**
(21) Application number: 11275083.1
(22) Date of filing: 20.05.2011
(51) Int. Cl.: G06F 21/00, H04L 29/06

(54) **Supervised data transfer**

(71) Applicant: BAE Systems Plc, London SW1Y 5AD (GB)
(72) Inventor: The designation of the inventor has not yet been filed
(74) Representative: BAE SYSTEMS plc Group IP Department

(57) **Abstract**

An apparatus and method are provided for supervised transfer of data between networks at the request of a human user. In a preferred implementation an apparatus is provided comprising:
a data transfer device arranged with access by means of a first network interface to a first data communications network and with access by means of a second network interface to a second data communications network;
computing means providing, in a first computing environment, a first user interface to receive requests to download data from a data source linked to the first data communications network to the data transfer device;
computing means providing, in a second computing environment isolated from the first computing environment, a second user interface to receive requests to transfer downloaded data from the data transfer device to a recipient computing device linked to the second data communications network; and
supervisory means arranged to determine, prior to implementing a requested data transfer over the second network, a probability that the request to transfer data from the data source to the recipient computing device originates from other than a human user.

## Description

This invention relates to data transfer between networks and in particular, but not exclusively, to digital data transfer between physical or virtual networks or environments under at least partially automated supervision and intervention.

It is known to deploy a network gateway between a first and a second network to provide an interface between the different networks, for example where they operate using different network protocols. The network gateway may be used to control the transfer of data from a data source linked to one network, the public internet for example, to a data recipient linked to the other network, a corporate network for example. The network gateway may be implemented in general purpose computing hardware and software, or as a more specialised device such as a router. Conveniently, the gateway may execute software to provide conventional firewall functionality in an attempt to prevent certain types of data entering the corporate network. The gateway may also implement more sophisticated checks on data, for example relating to its content or to the identity of the data source, blocking data transfers which fail any of the checks applied.

However, hardware and software alone are not always sufficient to determine whether movement of data from one network to another should be permitted or prevented. Ultimately, a human user may need to make a decision as to whether initially to request and then to permit the transfer of data, with any associated risks, from a named data source to a recipient computing device under the user's control. What is needed is an appropriate level of automated support to enable the human level decision making process to proceed, but with a reduced risk of it being compromised.

From a first aspect, the present invention resides in an apparatus for controlling the transfer of data between networks, comprising:
data transfer means arranged with access by means of a first network interface to a first data communications network and with access by means of a second network interface to a second data communications network;
computing means providing, in a first computing environment, a first user interface to receive requests to download data from a data source linked to the first data communications network to the data transfer means;
computing means providing, in a second computing environment isolated from the first computing environment, a second user interface to receive requests to transfer downloaded data from the data transfer means to a recipient computing device linked to the second data communications network; and
supervisory means arranged to determine, prior to implementing a requested transfer of data over the second network, a probability that the request to transfer data from the data source to the recipient computing device originates from other than a human user.

In a preferred embodiment, in the event that the determined probability exceeds a predetermined threshold, the supervisory means are arranged to trigger one or more actions selected from:
at the second user interface, requesting entry by a user of information designed to identify the user as a legitimate human user;
storing, in a log, details of the user requests and an indication of the basis for recognising a non-human request to transfer data to the recipient device;
communicating, to a supervisory user, details of the user requests and an indication of the basis for recognising a non-human request to transfer data to the recipient device ; and
indicating, at the second user interface, that the requested data transfer has been suspended and terminating the requested data transfer.

Preferably, a data transfer request by other than a human user is indicated when data characterising the data transfer request is found to be statistically inconsistent with one or more metrics, indicative of human behaviour, derived from historical data transfer requests. Such metrics may be computed from data characterising one or more users' data transfer activity over a given time period.

In a preferred technique, the supervisory means are arranged to compare the one or more metrics calculated from time series data characterising the user's data transfer requests over a time period t with respective metrics calculated from time series data characterising the user's data transfer requests, or data transfer requests of other users, over a longer time period T in order to detect divergent, non-human behaviour. The comparison may also be made with predetermined reference data indicative of human or non-human data transfers. The time series data characterising the user's data transfer requests over a time period t may include data characterising a current user data transfer request.

Preferably, the data characterising a user's data transfer requests include at least one type of data selected from:
data representative of the content of data that a user has requested be transferred;
the time at which each data transfer request was made;
the claimed identity of the user requesting a transfer;
the type of data indicated by a user's data transfer request; and metadata indicative of the type of software operating on the user's computing device from where a data transfer request was initiated.

By collecting such data, various checks and comparisons can be performed designed to identify discrepancies and inconsistencies that may be indicative both of human and non-human data transfer requests, leading to those metrics that can be used to distinguish data transfer requests by other than human users, for example those generated automatically by rogue software.

Preferred embodiments of the present invention are designed to operate where at least one of the first and second networks is a virtual network.

In one preferred implementation, the data transfer means comprise distinct first and second virtual processing environments hosted on a single physical computing device, the first user interface and the first network interface being implemented within the first virtual processing environment and the second user interface and the second network interface being implemented within the second virtual processing environment.

In an alternative preferred implementation, the data transfer means comprise first and second computing environments implemented using separate physical computing environments such that there is no direct data link between the first and the second computing environment and each physical computing environment is provided with a respective interface to the first or second network. In a variant on this, one or both of the physical computing environments may incorporate a virtual environment in which the functionality associated with the present invention may operate in isolation from other functions implemented using that particular physical computing environment.

From a second aspect, the present invention resides in a method for controlling the transfer of data between a data source linked to a first data communications network and a recipient computing device linked to a second data communications network, comprising the steps:
(i) at a first user interface, requesting a download of data from the data source to an intermediate device over the first network;
(ii) at a second user interface, requesting a transfer of data downloaded to the intermediate device, to the recipient computing device over the second network; and
(iii) performing a supervisory step, prior to implementing the requested transfer of data over the second network, arranged to determine a probability that the request to transfer data from the data source to the recipient computing device originates from other than a human user.

Preferably, the method may comprise the further step:
(iv) in the event that the probability determined at the supervisory step (iii) exceeds a predetermined threshold, of triggering one or more actions selected from:
   at the second user interface, requesting entry by a user of information designed to identify the user as a human user;
   storing, in a log, details of the user requests and an indication of the basis for recognising a non-human request to transfer data to the recipient device;
   communicating, to a supervisory user, details of the user requests and an indication of the basis for recognising a non-human request to transfer data to the recipient device; and
   indicating, at the second user interface, that the requested data transfer has been suspended and terminating the requested data transfer.

Preferably, a data transfer request or a series of data transfer requests by other than a human user is or are indicated when it is or they are found, at the supervisory step (iii), to be statistically inconsistent with one or more metrics, indicative of human behaviour, derived from historical data transfer requests by the user or by other users. Alternatively or in addition, statistical consistency may be determined between a data transfer request and one or more metrics indicative of non-human behaviour. These one or more metrics may be computed from data characterising one or more users' data transfer activity over a given time period.

Preferably, at the supervisory step (iii), the probability is determined by comparing the one or more metrics calculated from time series data characterising the user's data transfer requests over a time period t with respective metrics calculated from time series data characterising the user's data transfer requests, or data transfer requests of other users, over a longer time period T to thereby calculate a probability of divergent, non-human behaviour. The time series data characterising the user's data transfer requests over a time period t may include data characterising a current user data transfer request.

Preferably, these metrics may be calculated based upon at least one type of data selected from:
data representative of the content of data that a user has requested be transferred;
the time at which each data transfer request was made;
the claimed identity of the user requesting a transfer;
the type of data indicated by a user's data transfer request; and metadata indicative of the type of software operating on the user's computing device from where a data transfer request was initiated.

In order to reduce the level of false alarm in the detection of non-human data transfer requests, preferably a feedback step may be implemented by which a supervisory or administrative user may confirm or amend a result by the supervisory step (iii) to thereby modify calculations performed in respect of a particular user or in respect of particular operating conditions associated with that user.

Preferably, in the event that the determined probability exceeds a predetermined threshold, a challenge-response test may be issued, by means of the second user interface, designed to elicit an incorrect response if by other than a human user. The challenge-response test may be a "CAPTCHA" (Completely Automated Public Turing test to tell Computers and Humans Apart) request or other form of Turing test, or it may be a request for entry of data provided by a device believed to be in the sole possession of the user (as used to implement two-factor authentication).

From a third aspect, the present invention resides in a computer program product comprising one or more executable software modules which when loaded and executed on a general purpose computer, or upon a distributed arrangement of computers, is arranged to implement the method according to that defined from the second aspect of the present invention, above.

From a fourth aspect, the present invention resides in a data carrier comprising a computer-readable medium having stored thereon software code means which when loaded and executed on a general purpose computer, or upon a distributed arrangement of computers, are arranged to implement the method steps as defined according to the second aspect of the present invention.

From a fifth aspect, the present invention resides in a computer, or distributed arrangement of computers, having loaded thereon a computer program product according to the third aspect of the present invention.

Preferred embodiments of the present invention will now be described in more detail, by way of example only, with reference to the accompanying drawings of which:
Figure 1 shows a conventional arrangement whereby a network gateway is used to interconnect two data communications networks for the purpose of enabling and, optionally, limiting traffic flow between those networks according to predetermined criteria; and
Figure 2 shows a data transfer device providing an interface between two data communications networks according to a preferred embodiment of the present invention.

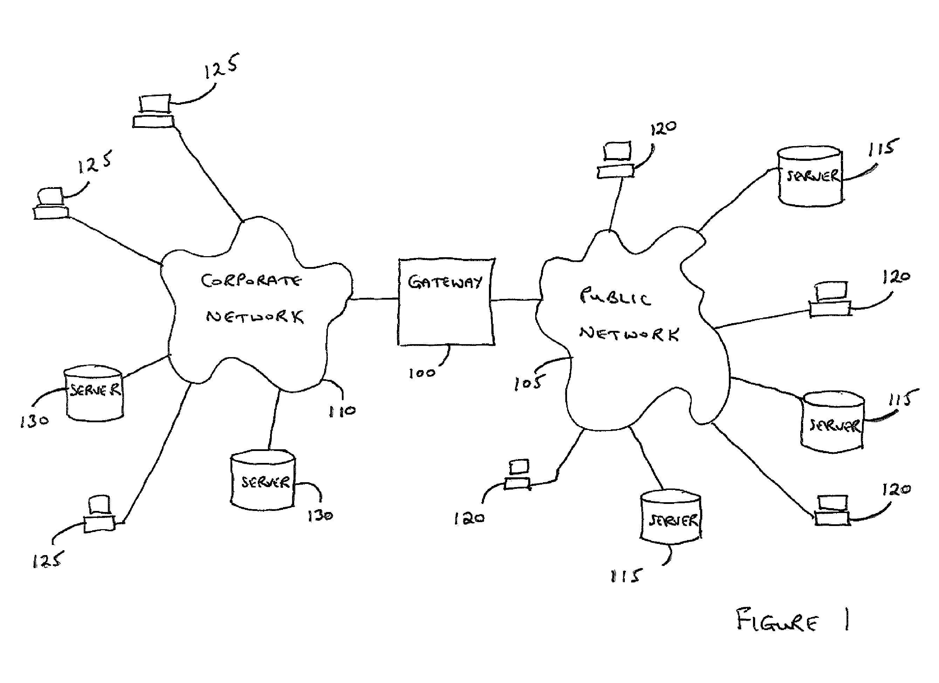

Referring firstly to Figure 1, a conventional inter-network gateway 100 is shown providing an interface between a public network 105 and a corporate network 110. The public network 105 may be the public internet or another type of wide area network having a number of data servers 115 linked to it, accessible via user terminal equipment 120 running appropriate software (internet browser software for example) to enable users to search for and download data stored on those servers 115. Similarly, the corporate network 110 may have a number of examples of user terminal equipment 125, some being similar to that used to access the public network 105, and data servers 130 accessible to authorised users of that terminal equipment 125. Users of the corporate network 110 may access data servers 115 on the public network 105 via the gateway 100 for searching and downloading data, according to predetermined controls on data access and data transfer implemented on the gateway 100. Similarly, selected users (120) on the public network may be given access to certain data on corporate network servers 130, subject to an appropriate communications link, optionally encrypted, being established across the gateway 100.

The gateway 100 provides a convenient point at the edge of the corporate network 110 to implement a range of data transfer controls, such as conventional firewall software and hardware, virus checkers, and software to impose general restrictions on access to certain data servers 115 on the public network 105 according to corporate policy.

Preferred embodiments of the present invention allow for a different approach to data transfer between networks, facilitating and protecting a human decision making process relating to the transfer of data between networks, only intervening when appropriate.

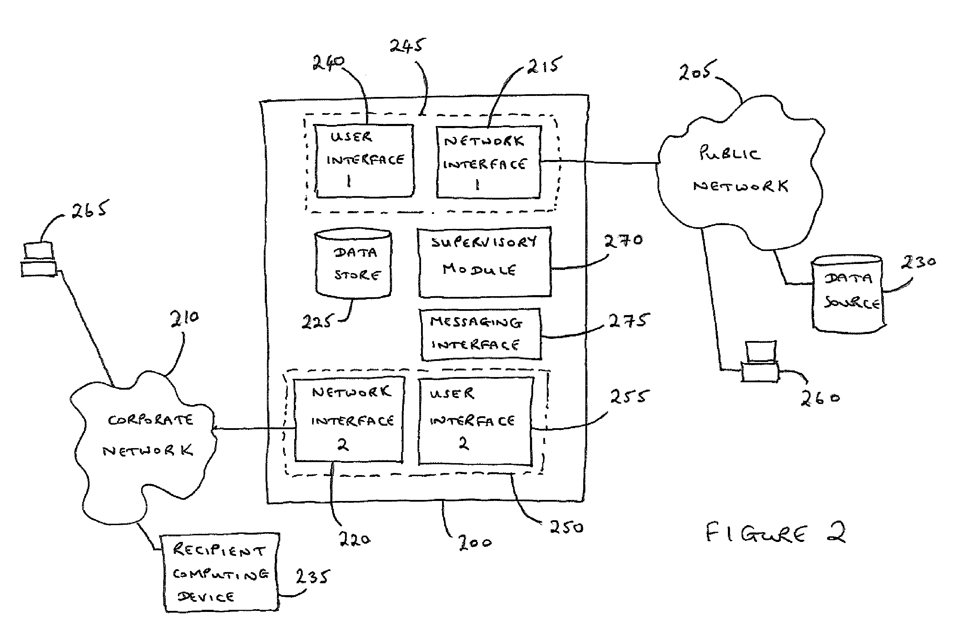

To this end, and in summary, the present invention provides a system and method to enable a user to request the transfer of data from a data source linked to a first network, the public internet for example, to a recipient computing device linked to a second network, a corporate network for example, by means of an intermediate data transfer device that will be referred to hereafter as an "interactive content gateway". The data transfer request is made in two distinct stages. A first user interface is provided to enable the user to request the download of data over the first network from the data source to the interactive content gateway. A second user interface, executing in a separate computing environment to that of the first, and with no direct data link between those computing environments, enables the same user or a different user to request the transfer, over the second network, of downloaded data to the recipient device. Supervisory software is provided, running on the interactive content gateway, to monitor the requested data transfers and to trigger appropriate action in the event that a data transfer request by other than a human user is detected. Preferred implementations and variations of these features will now be described in more detail with reference to Figure 2.

Referring to Figure 2, a preferred interactive content gateway 200 is shown interlinking a first network 205-the public internet for example - and a second network 210 - a corporate network for example. To enable such an interlinking, the interactive content gateway 200 is provided with a first network interface 215 to the first network 205 and a second network interface 220 to the second network 210. A data store 225 is provided to store data downloaded from a data source 230 linked to the first network 205 and from which downloaded data may be transferred over the second network 210 to a recipient computing device 235. A first user interface software module 240 executes on the interactive content gateway 200 in a first virtual processing environment 245 shared with software implementing the first network interface 215. In a second, separate virtual processing environment 250, a second user interface module 255 executes, along with software implementing the second network interface 220, there being no direct data connection between the first and second virtual processing environments 245, 250. However, software executing in each of the first and second virtual processing environments 245, 250 may access the data store 225 for the storage and retrieval of data. Such distinct virtual processing environments 245, 250 may be established by conventional virtualisation technologies, for example using software products such as VMware® (VMware Inc.) executing under an operating system such as Linux®, or by other known secure and high-assurance virtualisation technologies which operate directly with data processing hardware rather than through an operating system.

Preferably, a user may access the first user interface 240 by means of a first user computing device 260 linked to the first network 205, preferably but not necessarily over a secure connection established between the first user computing device 260 and the first network interface 215 on the interactive content gateway 200. For example, where the first network is an Internet Protocol (IP)-based network (as for the public internet), the connection may be implemented using the secure HTTP protocol under the control of conventional web browser software executing on the terminal device 260 such as Internet Explorer (Microsoft Corporation), Safari (Apple Inc.), FireFox (Mozilla Corporation) or Chrome (Google Inc.). The same user may access the second user interface 255 by means of a second computing device 265 linked to the second network 210 over an appropriate connection, not necessarily using a secure protocol, established with the second network interface 220. Further detail of preferred functionality provided by the first and second user interfaces 240, 255 will be apparent from the description that follows.

In an alternative implementation, the first and second user interfaces 240, 255 may be accessed from a single terminal device (not shown in Figure 1) linked directly or indirectly to the interactive content gateway 200 as would be apparent to a person of ordinary skill in the relevant field. A single terminal device may provide, for example using virtualisation software, two processing environments with one providing the functionality of the user terminal device 260 and the other providing the functionality of the user terminal device 265. The configuration of such a single terminal device would also need to ensure that the processing environment equivalent to the device 260 can communicate with the first user interface 240 but not the second, 255, and that the processing environment equivalent to the device 265 can communicate with the second user interface 255 but not the first, 240. Such a communications scheme may be provided using either two separate physical connections, each linking the single terminal device to the interactive content gateway 200, or using virtual connections. Preferably, by these means or by others, a user may request both the first and the second stages of a data transfer between a data source 230 and a recipient computing device 235 from the single physical computing device, as would be apparent to the above-mentioned person of ordinary skill in this field.

A supervisory software module 270 is provided, executing on the interactive content gateway 200, arranged to receive details of data transfer requests from both the first and second user interfaces 240, 255 and arranged with access to the data store 225 to enable not only a user's data transfer requests to be analysed, but also any corresponding downloaded data. The supervisory module 270 may comprise sub-modules executing in each of the first and second virtual environments 245, 250, each sub-module having means for communicating with a common supervisory component (270). In this way, the supervisory module 270 may not only monitor details of data transfer requests but it may trigger alterations in the functionality of the first and/or the second user interfaces 240, 255, in the event that a potentially non-human data transfer request has been submitted, in particular to obtain additional verification of the user's credentials. The supervisory module 270 is arranged to maintain a log in the data store 225 of user data transfer requests and of the basis for any finding of potentially non-human behaviour. The supervisory module 270 may also be provided with access to a messaging interface 275 in order to alert a supervisory or administrative user to a detected event, or to obtain authorisation from such a user for a particular data transfer request.

Preferred functionality of the supervisory module 270 may be summarised as follows:
(1) capture and analysis of a user's data transfer history over a period of time;
(2) derivation of metrics characterising a user's data transfer activity;
(3) comparison of metrics derived for a user's recent data transfer activity over a time period t with metrics derived for this user and/or other users over a longer time period T in order to detect divergent activity;
(4) detection of machine-generated rather than human-generated data transfer requests;
(5) generation of test scenarios for presentation via the first or second user interface 240, 255 to prompt a response likely to identify a user as human; and
(6) detection of prohibited data types being requested or during transfer.

Preferably, data captured by the supervisory module 270 in (1) may include:
- data representative of the content of data that a user has requested be transferred;
- the time at which each data transfer request was made;
- the claimed identity of the user requesting a transfer;
- the type of data indicated by a user's data transfer request (e.g. "binary file", "image", "URL"); and
- metadata defining the software operating on the user's computing device 260, 265 from where the first or second stage transfer request was initiated (e.g. browser version, operating system version, etc).

These data, or a subset of them, may be captured and represented as (potentially multi-dimensional) time series data over a given time period t (including or excluding data captured from a current data transfer request) and such data may be compared with time series data representing previous data transfers by this and/or by other users over a longer time period T. Alternatively, or in addition, time series data may be compared with other predetermined measures of valid human and non-human data transfer activity. Comparisons may be achieved using various known statistical or other comparison techniques, based for example upon geometrical ratios, arithmetic differences or vector cross-products, for comparing data sets. For example, the comparison techniques may include statistical measures such as diversity, autocorrelation or entropy and may also take into account the results of executing other types of algorithm on the data transferred according to previous user data transfer activity, such as natural language processing, image recognition or format comparisons.

From these comparisons the supervisory module 270 may determine a probability that the user's activity is divergent, representative of automated activity rather than human activity, and may trigger an appropriate response at the user interfaces 240, 255 in the event that the probability exceeds a predetermined threshold.

One example of a metric that may be used to distinguish automated activity from human activity is a measure of the average delay between a user's data download request at the first user interface 240 and a corresponding data transfer request at the second user interface 255 over a time period T. A statistically significant difference between the average delay over a recent time period t and the average over the longer time period T may indicate divergent behaviour, perhaps suggestive of automated submission of requests. Alternatively, or in addition, the variance in delay can be measured over a time period T and divergent behaviour may be indicated if a significantly reduced variance is observed over the shorter time period t in comparison with that more usually observed by this and/or by other users.

In a further metric, the type of data indicated in a data transfer request may be compared with the type of content actually being carried by the data being transferred. In particular, the type of data indicated in a request, at the first user interface 240, to download data from a data source 230 to the interactive content gateway 200 may be compared with the type of data indicated by an analysis of the content of the resultant downloaded data. Furthermore, the type of data indicated in a request, at the second user interface 255, to transfer downloaded data from the interactive content gateway 200 to the recipient computing device 235 may be compared with the type of data indicated by an analysis of the content of the downloaded data. Any discrepancy between the two may be subject to comparison with historical measures of the metric for the same or for different users.

In the event that the supervisory module 270 detects that a data transfer request or a recent series of data transfer requests are indicative of non-human activity, the supervisory module 270 may generate a challenge-response test at the second user interface 255 prior to implementing a requested transfer of data over the second network 210, assuming that a potential "attacker" would be accessing the data transfer functionality from the first network 205. The challenge-response test may require entry of data from a two factor authentication device that would be held by a human user to verify that they are whom they claim to be, or a prompt for the user to complete a two part "CAPTCHA" (Completely Automated Public Turing test to tell Computers and Humans Apart) or another known type of test designed to be difficult for a computer to respond to correctly. The received response to such a test is analysed by the supervisory module 270 to determine whether the response was provided by a legitimate human user and if this is the case, then to permit the requested transfer process to proceed without further interruption. Further information may be requested at one or other of the user interfaces 240, 255 or from a supervisory user if required to increase confidence in the authenticity of the user making the data transfer request.

Preferably, a number of such comparisons may be performed in parallel, using multiple different implementations of the techniques referenced above, for example using different statistical calculations or algorithms operating on a given set of captured data.

Preferably, the results of certain of the calculations above may be subject to comparison with predetermined norms or thresholds to determine whether they are indicative of activity that warrants intervention. Feedback may be provided by a supervisory or administrative user to enable such norms or thresholds to be updated to reduce the incidence of false alarm for a given user, a given set of users or a given network or for a particular operating situation, for example for particular dates and/or times of day, the type of data transfer, the type of computer system being used by the user to request and/or retrieve the transfer, or other aspects of the current operating situation.

In the event of any enduring doubt being highlighted regarding the authenticity of a user, the supervisory module 270 may establish contact with a predetermined supervisory or administrative user either to obtain their authorisation for the requested data transfer or for information only, providing details to such a user of the requested transfer and the basis for doubt as to the validity of the transfer request, as required.

Whereas the first and second networks 205, 210 may be separate physical networks, one or both of them may be, alternatively, virtual networks implemented within a common network infrastructure. Similar functionality to that described above in the case of two physical networks may be applied to the case where one network is a physical network and one a virtual network, or where both are virtual networks. Encryption or other software means may be used to maintain the separation of the two networks for the purposes of controlled data transfer, according to the present invention. The first and/or the second network interfaces 215, 220 may therefore be implemented as virtual network interfaces, as appropriate.

In the preferred embodiment described above with reference to Figure 2, the interactive content gateway 200 as described may be implemented using a single physical computing device. However, it would be apparent to a person of ordinary skill in the relevant field that the functionality of the interactive content gateway 200 may be distributed across two or more separate physical computing devices with appropriate communications paths in place.

## Claims

1. An apparatus for controlling the transfer of data between networks, comprising:
data transfer means arranged with access by means of a first network interface to a first data communications network and with access by means of a second network interface to a second data communications network;
computing means providing, in a first computing environment, a first user interface to receive requests to download data from a data source linked to the first data communications network to the data transfer means;
computing means providing, in a second computing environment isolated from the first computing environment, a second user interface to receive requests to transfer downloaded data from the data transfer means to a recipient computing device linked to the second data communications network; and
supervisory means arranged to determine, prior to implementing a requested transfer of data over the second network, a probability that the request to transfer data from the data source to the recipient computing device originates from other than a human user.

2. The apparatus according to claim 1, wherein the supervisory means are arranged, in the event that the determined probability exceeds a predetermined threshold, to trigger one or more actions selected from:
at the second user interface, requesting entry by a user of information designed to identify the user as a legitimate human user;
storing, in a log, details of the user requests and an indication of the basis for recognising a non-human request to transfer data to the recipient device;
communicating, to a supervisory user, details of the user requests and an indication of the basis for recognising a non-human request to transfer data to the recipient device ; and
indicating, at the second user interface, that the requested data transfer has been suspended and terminating the requested data transfer.

3. The apparatus according to claim 1 or claim 2, wherein a data transfer request by other than a human user is indicated when it is found to be statistically inconsistent with one or more metrics, indicative of human behaviour, derived from historical data transfer requests.

4. The apparatus according to claim 3, wherein the supervisory means are arranged to derive said one or more metrics from time series data characterising the user's data transfer requests over a time period t and to compare said one or metrics in respect of the time period t with respective metrics derived from time series data characterising the user's data transfer requests, or data transfer requests of other users, over a longer time period T in order to detect divergent, non-human behaviour.

5. The apparatus according to claim 4, wherein data characterising a user's data transfer requests include at least one type of data selected from:
data representative of the content of data that a user has requested be transferred;
the time at which each data transfer request was made;
the claimed identity of the user requesting a transfer;
the type of data indicated by a user's data transfer request; and
metadata indicative of the type of software operating on the user's computing device from where a data transfer request was initiated.

6. The apparatus according to any one of the preceding claims, wherein at least one of the first and second network is a virtual network.

7. The apparatus according to any one of the preceding claims, wherein the data transfer means comprise distinct first and second virtual processing environments hosted on a single physical computing device, the first user interface and the first network interface being implemented within the first virtual processing environment and the second user interface and the second network interface being implemented within the second virtual processing environment.

8. The apparatus according to any one of claims 1 to 6, wherein the data transfer means comprise first and second computing environments implemented using separate physical computing environments such that there is no direct data link between the first and the second computing environment and each physical computing environment is provided with a respective interface to the first or second network

9. A method for controlling the transfer of data between a data source linked to a first data communications network and a recipient computing device linked to a second data communications network, comprising the steps:
(i) at a first user interface, requesting a download of data from the data source to an intermediate device over the first network;
(ii) at a second user interface, requesting a transfer of data downloaded to the intermediate device, to the recipient computing device over the second network; and
(iii) performing a supervisory step, prior to implementing the requested transfer of data over the second network, arranged to determine a probability that the request to transfer data from the data source to the recipient computing device originates from other than a human user.

10. The method according to claim 9, further comprising the step:
(iv) in the event that the probability determined at the supervisory step (iii) exceeds a predetermined threshold, of triggering one or more actions selected from:
at the second user interface, requesting entry by a user of information designed to identify the user as a human user;
storing, in a log, details of the user requests and an indication of the basis for recognising a non-human request to transfer data to the recipient device;
communicating, to a supervisory user, details of the user requests and an indication of the basis for recognising a non-human request to transfer data to the recipient device; and
indicating, at the second user interface, that the requested data transfer has been suspended and terminating the requested data transfer.

11. The method according to claim 9 or claim 10, wherein a data transfer request or a series of data transfer requests by other than a human user is or are indicated when it is or they are found, at the supervisory step (iii), to be statistically inconsistent with one or more metrics, indicative of human behaviour, derived from historical data transfer requests by the user or by other users.

12. The method according to claim 11 wherein, at the supervisory step (iii), said probability is determined by deriving said one or more metrics from time series data characterising the user's data transfer requests over a time period t and by comparing said one or more metrics in respect of the time period t with respective metrics derived from time series data characterising the user's data transfer requests, or data transfer requests of other users, over a longer time period T to thereby calculate a probability of divergent, non-human behaviour.

13. The method according to claim 12, wherein said data characterising a user's data transfer activity include at least one type of data selected from:
data representative of the content of data that a user has requested be transferred;
the time at which each data transfer request was made;
the claimed identity of the user requesting a transfer;
the type of data indicated by a user's data transfer request; and
metadata indicative of the type of software operating on the user's computing device from where a data transfer request was initiated.

14. The method according to any one of claims 9 to 13, including a feedback step by which a supervisory user may confirm or amend a result by the supervisory step (iii) to thereby modify calculations performed in respect of a particular user or in respect of particular operating conditions associated with that user.

15. The method according to any one of claims 9 to 14, further comprising the step, in the event that the determined probability exceeds a predetermined threshold, issuing, by means of the second user interface, a challenge-response test designed to elicit an incorrect response if by other than a human user.
